# EUROPÄISCHE PATENTSCHRIFT

(11) **EP 0 444 250 B1**
(45) Veröffentlichungstag und Bekanntmachung des Hinweises auf die Patenterteilung: **14.06.1995**
(21) Anmeldenummer: 90122465.9
(22) Anmeldetag: 26.11.1990
(51) Int. Cl.: F16H 59/02

(54) **Schaltvorrichtung für ein automatisches Getriebe**
Shift device for automatic transmission
Dispositif de changement de vitesse pour transmission automatique

(30) Priorität: 22.02.1990 DE 4005588
(43) Veröffentlichungstag der Anmeldung: 04.09.1991
(73) Patentinhaber: Dr.Ing.h.c. F. Porsche Aktiengesellschaft, 70435 Stuttgart (DE)
(72) Erfinder: Maier, Ulrich, W-7149 Freiberg/N. (DE); Müller, Robert, Dipl.-Ing. (FH), W-7251 Moensheim (DE); Stehle, Heinz, Dipl.-Ing. (FH), W-7251 Weissach (DE)

(56) Entgegenhaltungen:
- EP-A- 0 107 761
- EP-A- 0 353 310
- WO-A-90/04225
- DE-A- 3 807 881
- FR-A- 2 636 396
- GB-A- 2 228 980

## Beschreibung

Die Erfindung betrifft eine Schaltvorrichtung gemäß dem Oberbegriff des Anspruches 1.

Eine derartige Schaltvorrichtung ist beispielsweise aus der der EP 0 353 310 A1 bekannt. Diese umfaßt einen Wählhebel, mit dem verschiedene Getriebestufungen vorwählbar sind. In einer definierten Schaltstellung (Hold), die der Parkstellung herkömmlicher Automatikgetriebe entspricht, ist ein Geschwindigkeitsbereich vorwählbar. Dabei wird in einer ersten Schaltbewegung senkrecht zur Schaltgasse (Up) das Getriebe mit einer schnellen Zahnradgruppe verbunden. In einer zweiten, entgegengesetzten Schaltbewegung (Down) wird das Getriebe mit einem Zahnradpaar für geringe Geschwindigkeiten verbunden.
Damit ist jedoch kein willkürliches Schalten einzelner Getriebegänge möglich. Mit einer Getriebeschalteinrichtung dieser Art sind in dem Getriebe nach- bzw. vorgeschaltete Schaltstufen betätigbar, wie sie beispielsweise bei Geländereduzierstufen oder allgemeinen Reduzierstufen anzutreffen sind. In einem weiteren Ausführungsbeispiel dieser Druckschrift ist ein erster Lenkstockschalter zum Vorwählen der Getriebestufungen F, N, R vorgesehen.
Mit einem zweiten Lenkstockschalter können weitere Schaltbereiche manuell vorgewählt werden. Dabei werden jedoch nicht die einzelnen Gänge willkürlich geschaltet, stattdessen werden bestimmte Getriebeabstufungen vorbestimmt bzw. das Schalten in bestimmte höhere Gänge verhindert.

Aus der DE 38 07 881 A1 ist eine Schaltvorrichtung für ein lastschaltbares Getriebe für wahlweise automatisches oder manuelles Schalten in einem Kraftfahrzeug bekannt. Die Schaltvorrichtung umfaßt dabei einen in einer H-förmigen Kulisse geführten Wählhebel. Eine der beiden in Längsrichtung des Kraftfahrzeuges angeordneten Schaltgassen weisen die für ein automatisches Getriebe üblichen Wählhebelstellungen P, R, N, D, 3, 2, 1 auf, während in der dazu parallelen Schaltgasse durch Verschwenken des Wählhebels in Fahrtrichtung um einen Gang aufwärts, entgegen der Fahrtrichtung um einen Gang abwärts geschaltet werden kann.

Aus der EP 0 107 761 A2 ist weiterhin eine Gangschaltung für ein fremdkraftbetätigtes Getriebe bekannt, bei der durch den Wählhebel ein Rauf- bzw. Runterschalten ausgelöst werden kann. Durch eine elektronische Auswerteschaltung wird dieser Gangwahl ein jeweils optimaler Gang zugeordnet. Über einen zusätzlichen am Wählhebel angeordneten Schalter kann die Auswerteschaltung unterdrückt werden, so daß bei zusätzlichem Drücken dieses Schalters nur ein Gang herauf- oder heruntergeschaltet wird.

Aufgabe der vorliegenden Erfindung ist es, eine gattungsgemäße Schaltvorrichtung dahingehend zu verbessern, daß das Getriebe bedienungsfreundlicher und die Fahrsicherheit erhöhend zu schalten ist.

Die Lösung dieser Aufgabe gelingt mit den Merkmalen des Anspruches 1. Weitere, die Erfindung vorteilhaft ausgestaltende Merkmale sind in den Unteransprüchen benannt.

Diese Schaltvorrichtung ermöglicht das wahlweise automatische oder manuelle Schalten eines lastschaltbaren Getriebes mit einem in nur einer Schaltgasse geführten Wählhebel. Die in der bereits genannten DE 38 07 881 durch das Verschwenken des Wählhebels in die zweite Schaltgasse schaltbaren Vorwärtsgänge sind erfindungsgemäß durch eine manuelle Gangwähleinrichtung schaltbar.
Gemäß einer ersten Ausführungsform der Erfindung wird diese Gangwähleinrichtung durch einen an dem Wählhebel angeordneten Wippschalter gebildet (Anspruch 2), der Schaltbefehle an ein elektronisches Steuergerät nur dann abgibt, wenn der Wählhebel in einer um die Stellung M (=Manuell) erweiterten Schaltgasse in diese Stellung M gebracht wurde (Anspruch 3). Als Basis für das Hoch- bzw. Rückschalten um einen Gang in der Stellung M wird der bei dem Bewegen des Wählhebels aus der Stellung D (=Drive) aktuelle, automatisch gewählte Gang in die Stellung M übernommen.
In einer Variante dieser Ausführungsform weist die Schaltgasse nur die üblichen Stellungen P (=Parken), R (=Rückwärts), N (=Neutral) und D auf. In der Stellung D des Wählhebels kann durch einen als Drucktaste ausgebildeten, an dem Wählhebel angeordneten Schalter die automatische Gangwahl unterdrückt werden und mit Hilfe des Wippschalters ein Schaltbefehl für eine Hoch- oder Rückschaltung ausgelöst werden (Anspruch 4).

In einer zweiten Ausführungsform der Erfindung ist die manuelle Gangwähleinrichtung als Lenkstockschalter ausgebildet und an der das Lenkrad des Kraftfahrzeuges haltenden Lenksäule angeordnet (Anspruch 5). Die Schaltgasse des Wählhebels weist dabei entweder die Stellungen P, R, N, D, M (Anspruch 6) oder die Stellungen P, R, N, D (Anspruch 9) auf. Manuelle Schaltbefehle sind dann nur in der Stellung M des Wählhebels durch Verschwenken des Lenkstockschalters möglich (Ansprüche 7 und 8).
Die Variante dieser Ausführungsform gemäß Anspruch 9 gestattet das Auslösen von manuellen Schaltbefehlen in der Stellung D des Wählhebels nach einem axialen Verschieben des Lenkstockschalters (Anspruch 10), die automatische Gangwahl wird dabei unterdrückt. Diese Unterdrückung wird durch ein zweites axiales Verschieben des Lenkstockschalters aufgehoben, eine manuelle Gangwahl ist nicht möglich (Anspruch 11).
Eine zweite Variante dieser Ausführungsform gibt Schaltbefehlen des Lenkstockschalters in der Stellung D des Wählhebels eine Priorität gegenüber der automatischen Gangwahl, so daß ein erstmaliges, axiales Verschieben des Schalters nicht notwendig ist. Ein einmaliges, axiales Verschieben des Schalters nach dem Auslösen manueller Schaltbefehle ermöglicht wieder die automatische Gangwahl (Anspruch 12).
Vorteilhaft bei dieser zweiten Ausführungsform ist das Verlegen der manuellen Gangwähleinrichtung in die Nähe des Lenkrades, also in den direkten Griffbereich des Fahrers. Die Fahrsicherheit ist hierbei erhöht, da beide Hände am Lenkrad verbleiben können und ein eventuell nötiger Blickkontakt zum Wählhebel überflüssig ist.

Gemäß einer dritten Ausführungsform der Erfindung ist die Schaltgasse des Wählhebels an die Lenksäule verlegt und die manuelle Gangwähleinrichtung ist in dem Wählhebel integriert (Anspruch 13). Die Schaltgasse weist dabei die Stellungen P, R, N, D, M auf (Anspruch 14) oder die Stellungen P, R, N, D (Anspruch 15). In der Stellung M werden manuelle Schaltbefehle durch Verschwenken des Wählhebels quer zur Schaltgasse ausgelöst (Anspruch 14).

Die Variante dieser Ausführungsform gemäß Anspruch 15 benötigt keine Stellung M, sondern gestattet eine manuelle Gangwahl in der Stellung D nach einem erstmaligen, axialen Verschieben des Wählhebels. Die Rückkehr zur automatischen Gangwahl wird durch ein zweites axiales Verschieben ausgelöst (Anspruch 16).
Eine zweite Variante dieser Ausführungsform gibt manuellen Schaltbefehlen durch Verschwenken des Wählhebels in der Stellung D Vorrang, so daß die automatische Gangwahl unterdrückt ist. Eine Rückkehr zur automatischen Gangwahl ist durch einmaliges, axiales Verschieben des Wählhebels möglich (Anspruch 17).

Allen Ausführungsformen der Erfindung gemeinsam ist eine vereinfachte Bedienung. Die bei üblichen Automatikgetrieben bekannte Schaltkulisse mit nur einer Schaltgasse wurde beibehalten, so daß das Verschwenken des Wählhebels in eine zweite Schaltgasse entfällt.

Anhand von Figuren wird die Erfindung im folgenden beispielhaft näher erläutert.

Es zeigen:
- Fig. 1: schematisch eine erste Ausführungsform der Erfindung,
- Fig. 2a: eine Ansicht einer Variante der ersten Ausführungsform in Richtung des Pfeiles A gemäß Fig. 1,
- Fig. 2b: eine Ansicht einer zweiten Variante der ersten Ausführungsform in Richtung des Pfeiles A gemäß Fig. 1,
- Fig. 3: schematisch eine zweite Ausführungsform der Erfindung und
- Fig. 4: schematisch eine dritte Ausführungsform der Erfindung.

Ein nicht näher gezeigtes Kraftfahrzeug mit der Fahrtrichtung F weist eine Brennkraftmaschine 1 mit einem daran angeflanschten, automatischen Getriebe 2 auf. Ein Lenkrad 3 ist an einer Lenksäule 4 gehalten. Ein Wählhebel 5 für das Getriebe 2 ist in einer Schaltgasse 6 einer Schaltkulisse 7 geführt.

Eine Ganganzeige 10 signalisiert beispielsweise in einem Instrumentenbrett die Stellung P (=Parken), R (=Rückwärts), N (=Neutral), D (=Drive), M (=Manuell) des Wählhebels 5 und den in den Stellungen D, M automatisch oder manuell gewählten, aktuellen Vorwärtsgang G1, G2, G3, G4.
Ein elektronisches Steuergerät 11 bewirkt die Steuerung des Getriebes 2.
Es verarbeitet unter anderem als Eingangssignale die Stellung des Wählhebels 5 sowie weitere Signale z.B. vom Getriebe 2, von der Brennkraftmaschine 1 sowie von nicht gezeigten Komponenten wie Kick-Down-Schalter, Bremslichtschalter und Raddrehzahlsensoren.
Mit Hilfe einer manuellen Gangwähleinrichtung 12 sind Schaltbefehle auslösbar, die von dem Steuergerät 11 verarbeitet werden und die die Vorwärtsgänge G1 bis G4 schalten. Der aktuell gewählte Vorwärtsgang wird ebenfalls in der Ganganzeige 10 signalisiert.

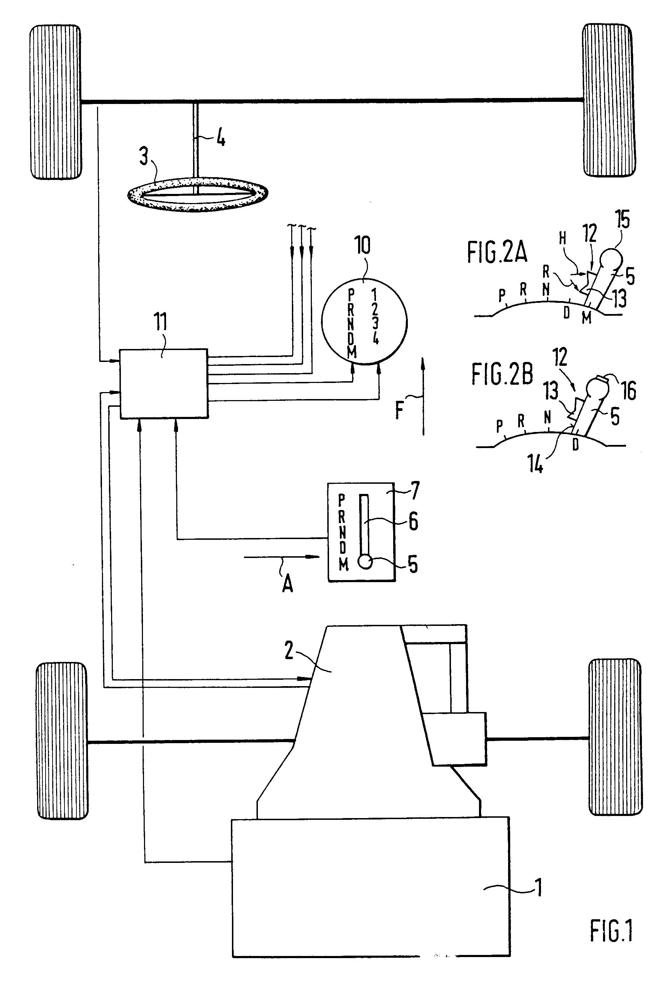

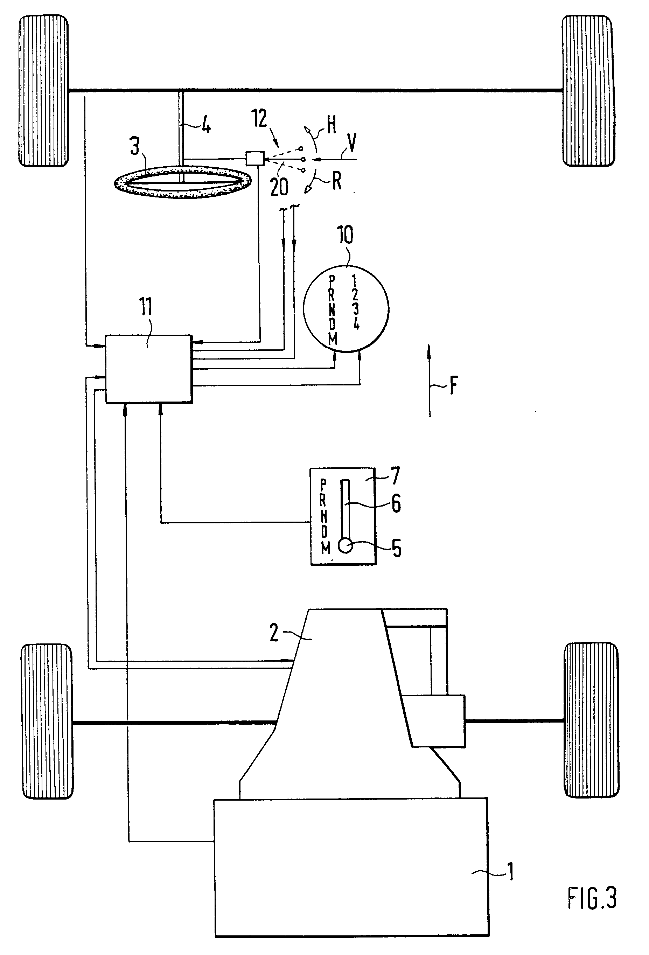

In einer ersten Ausführungsform der Erfindung gemäß Fig. 1 ist die manuelle Gangwähleinrichtung 12 als an dem Wählhebel 5 angeordneter Wippschalter 13 ausgebildet. In der Stellung M des Wählhebels 5 sind mit diesem Schalter 13 durch Betätigen in Richtung H Hochschaltungen und durch Betätigen in Richtung R Rückschaltungen um jeweils einen Gang möglich. Diese Schaltungen erfolgen jeweils auf der Basis des beim Verschwenken des Wählhebels 5 aus der Stellung D in die Stellung M übernommenen Vorwärtsganges.
Fehlschaltungen, z.B. Hochschaltung aus dem Gang G4, werden von dem Steuergerät 11 unterdrückt. Der Wippschalter 13 kann z.B. griffgünstig an der in Fahrtrichtung F liegenden Vorderseite 14 des Wählhebels 5 oder auf dessen Oberseite 15 angeordnet sein. Dieser Schalter 13 kehrt nach jeder Betätigung in eine neutrale Mittellage zurück (Fig. 2a).
In einer Variante dieser Ausführungsform weist die Schaltgasse 6 lediglich die Stellungen P, R, N, D auf. In der Stellung D des Wählhebels 5 ist eine manuelle Gangwahl mit Hilfe des Wippschalters 13 nach dem Betätigen eines als Drucktaste 16 ausgebildeten, auf der Oberseite 15 angeordneten Schalters möglich. Die automatische Gangwahl bleibt bis zum erneuten Betätigen der Drucktaste 16 unterdrückt (Fig. 2b).

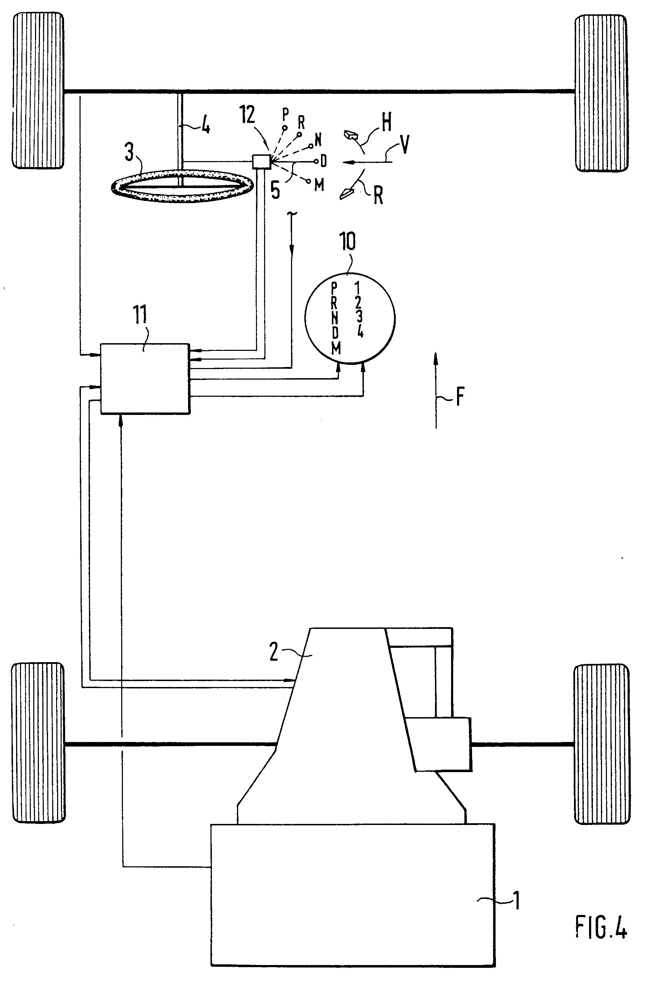

Eine zweite Ausführungsform der Erfindung gemäß Fig. 3 weist als manuelle Gangwähleinrichtung 12 einen an der Lenksäule 4 angeordneten Lenkstockschalter 20 auf, dessen Schaltbefehle vom Steuergerät 11 verarbeitet werden. In der Stellung M des Wählhebels sind durch Betätigen des Lenkstockschalters 20 in Richtung H bzw. R manuelle Hoch- bzw. Rückschaltungen möglich. Dabei kann dieser Schalter 20 aus einer neutralen, federverrasteten Mittellage in der Art eines Blinkerhebels auf- bzw. abwärts oder in der Art eines Lichthupenhebels vor- bzw. zurück bewegt werden. Das Verschwenken des Wählhebels 5 in die Stellung D bewirkt die Rückkehr zur automatischen Gangwahl.
In einer Variante dieser Ausführungsform weist die Schaltgasse 6 lediglich die Stellungen P, R, N, D auf. In der Stellung D des Wählhebels wird die automatische Gangwahl durch ein erstmaliges, axiales Verschieben des Lenkstockschalters 20 in Richtung des Pfeiles V unterdrückt. Der Schalter 20 kehrt danach in seine ursprüngliche Lage zurück. Manuelle Schaltbefehle sind nun durch Verschwenken des Schalters 20 solange möglich, bis durch erneutes Verschieben in Richtung V die manuelle Gangwahl unterdrückt wird.
Eine zweite Variante dieser Ausführungsform ermöglicht eine sofortige manuelle Gangwahl mit dem Schalter 20 in der Stellung D des Wählhebels 5.
Schaltbefehle des Schalters 20 haben somit eine in dem Steuergerät 11 festgelegte Priorität. Eine Rückkehr zur automatischen Gangwahl ist durch einmaliges Verschieben des Schalters 20 in Richtung V möglich.

In einer dritten Ausführungsform der Erfindung gemäß Fig. 4 ist die Schaltkulisse 7 mit der Schaltgasse 6 an die Lenksäule 4 verlegt. Die Gangwähleinrichtung 12 ist derart in die Lagerung des Wählhebels 5 integriert, daß das Steuergerät 11 in Abhängigkeit der Bewegungsrichtung des Wählhebels 5 manuelle Schaltbefehle empfängt oder die Stellung des Wählhebels 5 verarbeitet. Durch Verschwenken des Wählhebels 5 in der Art eines Blinkerhebels werden die Stellungen P, R, N, D, M angewählt. Durch Verschwenken in der Stellung M in Richtung H bzw. R senkrecht zur Schaltgasse 6 werden Hoch- bzw. Rückschaltbefehle ausgelöst.
In einer Variante dieser dritten Ausführungsform weist die Schaltgasse 6 die Stellungen P, R, N, D auf und die manuelle Gangwahl kann in analoger Weise zur zweiten Variante der zweiten Ausführungsform durch axiales Verschieben in Richtung V ein- bzw. ausgeschaltet werden.
Eine zweite Variante dieser dritten Ausführungsform ermöglicht eine sofortige manuelle Gangwahl mit dem Wählhebel 5 in der Stellung D durch eine in dem Steuergerät 11 festgelegte Priorität. Eine Rückkehr zur automatischen Gangwahl ist durch einmaliges Verschieben des Wählhebel 5 in Richtung V möglich.

## Patentansprüche

1. Schaltvorrichtung für ein durch ein elektronisches Steuergerät (1) gesteuertes automatisches Getriebe (2) eines Kraftfahrzeuges,
mit einem Wählhebel (5), durch dessen Verschwenken in einer Schaltgasse (6) verschiedene Schaltstufungen (P, N, R, D, M / P, N, R, D) vorwählbar sind,
und mit einer manuellen Gangwähleinrichtung (12),
**dadurch gekennzeichnet,**
daß mit der manuellen Gangwähleinrichtung (12) Schaltbefehle zum willkürlichen Schalten der Vorwärtsgänge (G1, G2, G3, G4) auslösbar sind,
und daß die Schaltgasse (6) für die verschiedenen Schaltstufungen (P, N, R, D, M / P, N, R, D) eine definierte, einer Fahrstellung des Getriebes (2) entsprechende Schaltstellung (D, M) des Wählhebels (5) aufweist, in der die manuelle Gangwähleinrichtung (12) betätigbar ist.

2. Vorrichtung nach Anspruch 1, **dadurch gekennzeichnet,** daß die Gangwähleinrichtung (12) als Wippschalter (13) ausgebildet und an dem Wählhebel (5) angeordnet ist.

3. Vorrichtung nach Anspruch 2, **dadurch gekennzeichnet,** daß die Schaltgasse (6) die Stellungen (P, R, N, D, M) aufweist und daß das Getriebe (2) mit dem Wippschalter (13) nur in der Stellung (M) des Wählhebels (5) schaltbar ist.

4. Vorrichtung nach Anspruch 2, **dadurch gekennzeichnet,** daß die Schaltgasse (6) die Stellungen (P, R, N, D) aufweist und an dem Wählhebel (5) ein weiterer Schalter (Drucktaste 16) angeordnet ist, nach dessen Betätigung das Getriebe (2) mit dem Wippschalter (13) nur in der Stellung (D) des Wählhebels (5) schaltbar ist.

5. Vorrichtung nach Anspruch 1, mit einer in dem Kraftfahrzeug angeordneten Lenksäule und einem daran gehaltenen Lenkrad, **dadurch gekennzeichnet,** daß die Gangwähleinrichtung (12) als Lenkstockschalter (20) ausgebildet ist und an der Lenksäule (4) angeordnet ist.

6. Vorrichtung nach Anspruch 5, **dadurch gekennzeichnet,** daß die Schaltgasse (6) die Stellungen (P, R, N, D, M) aufweist, und daß der Lenkstockschalter (20) nur in der Stellung (M) des Wählhebels (5) einen Schaltbefehl auslöst.

7. Vorrichtung nach Anspruch 6, **dadurch gekennzeichnet,** daß der Lenkstockschalter (20) aus einer neutralen Mittellage heraus durch einmaliges Verschwenken in (Richtung R) bzw. entgegengesetzt (Richtung H) dem Uhrzeigersinn eine Rückschaltung bzw. Hochschaltung um einen Vorwärtsgang (G1, G2, G3, G4) auslöst.

8. Vorrichtung nach Anspruch 6, **dadurch gekennzeichnet,** daß der Lenkstockschalter (20) aus einer neutralen Mittellage heraus durch einmaliges Verschwenken in (Richtung R) bzw. entgegengesetzt (Richtung H) der Fahrtrichtung (F) des Kraftfahrzeuges eine Hochschaltung bzw. Rückschaltung um einen Vorwärtsgang (G1, G2, G3, G4) auslöst.

9. Vorrichtung nach Anspruch 5, **dadurch gekennzeichnet,** daß die Schaltgasse (6) die Stellungen (P, R, N, D) aufweist und daß mit dem Lenkstockschalter (20) nur in der Stellung (D) des Wählhebels (5) Schaltvorgänge am Getriebe (2) auslösbar sind.

10. Vorrichtung nach Anspruch 9, **dadurch gekennzeichnet,** daß der Lenkstockschalter (20) durch erstmaliges Verschieben in seiner axialen Richtung (V) und durch daran anschließende Schwenkbewegungen dieses Schalters (20) Schaltbefehle auslöst.

11. Vorrrichtung nach Anspruch 10, **dadurch gekennzeichnet,** daß durch ein auf das erstmalige Verschieben folgendes zweites Verschieben des Lenkstockschalters (20) in seiner axialen Richtung (V) das Steuergerät (11) mit diesem Schalter (20) ausgelöste Schaltbefehle unterdrückt.

12. Vorrichtung nach Anspruch 9, **dadurch gekennzeichnet,** daß nach erfolgter Schwenkbewegung des Lenkstockschalters (20) durch einmaliges Verschieben dieses Schalters (20) in seine axiale Richtung (V) Schaltbefehle von dem Steuergerät (11) unterdrückt werden.

13. Vorrichtung nach Anspruch 1, mit einer in dem Kraftfahrzeug angeordneten Lenksäule und einem daran gehaltenen Lenkrad, **dadurch gekennzeichnet,** daß die Schaltgasse (6) an der Lenksäule (4) angeordnet ist und daß die manuelle Gangwähleinrichtung (12) in dem Wählhebel (5) integriert ist.

14. Vorrichtung nach Anspruch 13, **dadurch gekennzeichnet,** daß die Schaltgasse (6) die Stellungen (P, R, N, D, M) aufweist und daß durch Verschwenken des Wählhebels (5) in der Stellung (M) quer zu der Schaltgasse (6) die Vorwärtsgänge (G1, G2, G3, G4) schaltbar sind.

15. Vorrichtung nach Anspruch 13, **dadurch gekennzeichnet,** daß die Schaltgasse (6) die Stellungen (P, R, N, D) aufweist und daß nach erstmaligem Verschieben des Wählhebels (5) in seiner axialen Richtung (V) in der Stellung (D) und durch anschließendes Verschwenken quer zu der Schaltgasse (6) die Vorwärtsgänge (G1, G2, G3, G4) schaltbar sind.

16. Vorrichtung nach Anspruch 15, **dadurch gekennzeichnet,** daß nach einem auf das erstmalige folgenden zweiten axialen Verschieben des Wählhebels (5) in der Stellung (D) von diesem Hebel (5) ausgelöste Schaltbefehle von dem Steuergerät (11) unterdrückt werden.

17. Vorrichtung nach Anspruch 13, **dadurch gekennzeichnet,** daß die Schaltgasse (6) die Stellungen (P, R, N, D) aufweist und daß nach dem Verschwenken des Wählhebels (5) quer zu der Schaltgasse (6) Schaltbefehle für die Vorwärtsgänge (G1, G2, G3, G4) durch einmaliges, axiales Verschieben des Wählhebels (5) unterdrückt werden.

## Claims

1. A gear-shift device for an automatic transmission (2) of a motor vehicle, the transmission (2) being controlled by an electronic control device (1) and having a selector lever (5), pivotable in a gear-shift channel (6) for the pre-selection of different gear-shift stages (**P**, **N**, **R**, **D**, **M / P**, **N**, **R**, **D**), and having a manual gear-selector device (12), **characterized in that** gear-shift commands for optionally shifting the forward gears (**G1**, **G2**, **G3**, **G4**) can be triggered by the manual gear-selector device (12), and the gear-shift channel (6) for the different gear-shift stages (**P**, **N**, **R**, **D**, **M / P**, **N**, **R**, **D**) has a defined gear-shift setting (**D**, **M**) of the selector lever (5), which corresponds to a driving setting of the transmission (2) and in which the manual gear-selector device (12) is actuable.

2. A device according to Claim 1, **characterized in that** the manual gear-selector device (12) is constructed in the form of a rocker-type shifting means (13) and is mounted on the selector lever (5).

3. A device according to Claim 2, **characterized in that** the gear-shift channel (6) comprises the settings (**P**, **R**, **N**, **D**, **M**), and the transmission (2) is shiftable by the rocker-type shifting means (13) only in the setting (**M**) of the selector lever (5).

4. A device according to Claim 2, **characterized in that** the gear-shift channel (6) comprises the settings (**P**, **R**, **N**, **D**), and a further shifting means (push button 16) is mounted on the selector lever (5), the transmission (2) being shiftable by the rocker-type shifting means (13) only in the setting (**D**) of the selector lever (5) after the actuation of the said push button (16).

5. A device according to Claim 1, with a steering column arranged in the motor vehicle and a steering wheel held thereon, **characterized in that** the gear-selector device (12) is constructed in the form of a steering-column switch (20) and is mounted on the steering column (4).

6. A device according to Claim 5, **characterized in that** the gear-shift channel (6) comprises the settings (**P**, **R**, **N**, **D**, **M**), and the steering-column switch (20) triggers a gear-shift command only in the setting (**M**) of the selector lever (5).

7. A device according to Claim 6, **characterized in that** the steering-column switch (20) triggers a shift down or a shift up by one forward gear (**G1**, **G2**, **G3**, **G4**) from a neutral central position by pivoting once in the clockwise direction (**R**) or in the anti-clockwise direction (**H**) respectively.

8. A device according to Claim 6, **characterized in that** the steering-column switch (20) triggers a shift up or a shift down by one forward gear (**G1**, **G2**, **G3**, **G4**) from a neutral central position by pivoting once the direction of travel (**F**) of the motor vehicle (direction **R**) or opposite thereto (direction **H**) respectively.

9. A device according to Claim 5, **characterized in that** the gear-shift channel (6) comprises the settings (**P**, **R**, **N**, **D**), and gear-shifts on the transmission (2) can be triggered by the steering-column switch (20) only in the setting (**D**) of the selector lever (5).

10. A device according to Claim 9, **characterized in that** the steering-column switch (20) triggers gear-shift commands by an initial displacement in the axial direction (**V**) thereof and by subsequent pivoting movements of the said switch (20).

11. A device according to Claim 10, **characterized in that** the control device (11) suppresses gear-shift commands triggered by the steering-column switch (20) by a second displacement - following the initial displacement - of the said switch (20) in the axial direction (**V**) thereof.

12. A device according to Claim 9, **characterized in that** gear-shift commands are suppressed by the control device (11) after the displacement movement of the steering-column switch (20) has been performed by a single displacement of the said switch (20) in the axial direction (**V**) thereof.

13. A device according to Claim 1, with a steering column arranged in the motor vehicle and a steering wheel held thereon, **characterized in that** the gear-shift channel (6) is mounted on the steering column (4), and the manual gear-selector device (12) is integrated in the selector lever (5).

14. A device according to Claim 13, **characterized in that** the gear-shift channel (6) comprises the settings (**P**, **R**, **N**, **D**, **M**), and the forward gears (**G1**, **G2**, **G3**, **G4**) are shiftable by pivoting the selector lever (5) in the setting (**M**) transversely to the gear-shift channel (6).

15. A device according to Claim 13, **characterized in that** the gear-shift channel (6) comprises the settings (**P**, **R**, **N**, **D**), and the forward gears (**G1**, **G2**, **G3**, **G4**) are shiftable after an initial displacement of the selector lever (5) in the axial direction (**V**) thereof in the setting (**D**) and by a subsequent pivoting transversely to the gear-shift channel (6).

16. A device according to Claim 15, **characterized in that** gear-shift commands triggered by the selector lever (5) are suppressed by the control device (11) after a second axial displacement of the said lever (5) in the setting (**D**) following the first displacement.

17. A device according to Claim 13, **characterized in that** the gear-shift channel (6) has the settings (**P**, **R**, **N**, **D**), and gear-shift commands for the forward gears (**G1**, **G2**, **G3**, **G4**) are suppressed by a single axial displacement of the selector lever (5) after the pivoting of the selector lever (5) transversely to the gear-shift channel (6).

## Revendications

1. Dispositif de changement de vitesses pour une transmission automatique (2) de véhicule, commandée au moyen d'un appareil de commande (1) électronique, avec un levier de sélection (5) par le pivotement duquel différents niveaux de vitesses (P, N, R, D, M/P, N, R, D) peuvent être présélectionnés en le faisant pivoter dans sa ruelle de manoeuvre (6) et avec un dispositif de sélection de vitesse (12) manuel, caractérisé en ce qu'avec le dispositif de sélection de vitesses (12) manuel peuvent être déclenchés des ordres de commutation destinés à opérer une commutation à volonté des marches avant (G1, G2, G3, G4), et en ce que la ruelle de commutation (6) présente pour les différents degrés de vitesses (P, N, R, D, M/P, N, R, D) une position de commutation (D, M) du levier de sélection (5) définie, correspondant à la position de roulage du véhicule (2) et dans laquelle le dispositif de sélection de vitesse (12) manuel peut être actionné.

2. Dispositif sel on la revendication 1, caractérisé en ce que le dispositif de sélection de vitesses (12) est réalisé sous forme d'interrupteur à poussoir (13) et est disposé sur le levier de sélection (5).

3. Dispositif selon la revendication 2, caractérisé en ce que la ruelle de commutation (6) présente les positions (P, R, N, D, M) et en ce que la transmission (2) ne peut être commutée à l'aide de l'interrupteur à poussoir (13) que dans la position (M) du levier de sélection (5).

4. Dispositif selon la revendication 2, caractérisé en ce que la ruelle de commutation (6) présente les positions (P, R, N, D) et en ce sur le levier de sélection (5) est disposé un interrupteur supplémentaire à bouton-poussoir (16), après l'actionnement duquel la transmission (2) ne peut être commutée à l'aide de l'interrupteur à poussoir (13) que dans la position (D) du levier de sélection (5).

5. Dispositif selon la revendication 1, avec une colonne de direction disposée dans le véhicule automobile et un volant fixé dessus, caractérisé en ce que le dispositif de sélection (12) est réalisée sous forme de levier de colonne de direction (20) et est disposé sur la colonne de direction (4).

6. Dispositif selon la revendication 5, caractérisé en ce que la ruelle de commutation (6) présente les positions (P, R, N, D, M) et en ce que le levier de colonne de direction (20) ne déclenche un ordre de commutation que lorsque le levier de sélection (5) se trouve dans la position (M).

7. Dispositif selon la revendication 6, caractérisé en ce que le levier de colonne de direction (20) déclenche à partir d'une position médiane neutre, par pivotement effectué une seule fois dans la direction des aiguilles d'une montre (direction R), ou bien dans la direction opposée à celle des aiguilles d'une montre (direction H), une commutation de descente, ou de montée des rapports, de la valeur d'un rapport avant (G1, G2, G3, G4).

8. Dispositif selon la revendication 6, caractérisé en ce que le levier de colonne de direction (20) déclenche à partir d'une position médiane neutre par pivotement effectué une seule fois dans la direction de roulage (F) (direction R), ou dans la direction inverse du roulage (direction H) du véhicule automobile, un changement de montée, ou de descente des rapports, de la valeur d'un rapport avant (G1, G2, G3, G4).

9. Dispositif selon la revendication caractérisé en ce que la ruelle de commutation (6) présente les positions (P, R, N, D) et en ce qu'avec le levier de colonne de direction (20) ne peuvent être enclenchés sur la transmission (2) des processus de changement de rapport que lorsque le levier de sélection (5) se trouve en position (D).

10. Dispositif selon la revendication 9, caractérisé en ce que le levier de colonne de direction (20) déclenche des ordres de changement de rapport par un coulissement effectué une seule fois, dans sa direction axiale (V) et par des mouvements de pivotement subséquents de ce levier (20).

11. Dispositif selon la revendication 10, caractérisé en ce que, par un deuxième coulissement, subséquent au premier coulissement du levier de colonne de direction (20) dans sa direction axiale (V), l'appareil de commande (11) fait cesser les ordres de changement de rapport déclenchés à l'aide de ce levier (20).

12. Dispositif selon la revendication 9, caractérisé en ce qu'une fois effectué un mouvement de pivotement du levier de colonne de direction, par un coulissement effectué une fois de ce levier (20), opéré dans sa direction axiale V, les ordres de changement de rapport venant de l'appareil de commande (11) sont stoppés.

13. Dispositif selon la revendication 1, avec une colonne de direction disposée dans le véhicule automobile et un volant fixé dessus, caractérisée en ce que la ruelle de commutation (6) est disposée sur la colonne de direction (4) et que le dispositif de sélection de vitesse (12) manuel est intégré au levier de sélection (5).

14. Dispositif selon la revendication 13, caractérisé en ce que la ruelle de commutation (6) présente les positions (P, R, N, D, M) et en ce que par pivotement du levier de sélection (5) dans la position (M), transversalement par rapport à la ruelle de commutation (6), on peut effectuer le changement de rapport, concernant des vitesses de marche avant (G1, G2, G3, G4).

15. Dispositif selon la revendication 13, caractérisé en ce que la ruelle de commutation (6) présente les positions (P, R, N, D) et en ce qu'après un premier coulissement du levier de sélection (5) dans sa direction axiale V pour passer dans la position (D) et par un pivotement subséquent transversalement par rapport à la ruelle de commutation (6), on peut effectuer des changements de rapport de marche avant (G1, G2, G3, G4).

16. Dispositif selon la revendication 15, caractérisé en ce qu'après un deuxième coulissement axial, subséquent au premier coulissement, du levier de sélection (5), donnant le passage dans la position (D) les ordres de changement déclenchés ce levier (5) sont stoppés par l'appareil de commande (11).

17. Dispositif selon la revendication 13, caractérisé en ce que la ruelle de commutation (5) présente les positions (P, R, N, D) et en ce que, après pivotement du levier de sélection (5), transversalement par rapport à la ruelle de commutation (6), les ordres de commutation destinés au changement de rapport de marche avant (G1, G2, G3, G4) sont stoppés au moyen d'un coulissement axial, effectué une seule fois, du levier de sélection (5).
